# EUROPÄISCHE PATENTSCHRIFT

(11) **EP 0 828 326 B1**
(45) Veröffentlichungstag und Bekanntmachung des Hinweises auf die Patenterteilung: **16.01.2002**
(21) Anmeldenummer: 97114684.0
(22) Anmeldetag: 25.08.1997
(51) Int. Cl.: H02B 1/50

(54) **Energiesäule**
Energy column
Colonne d'énergie

(30) Priorität: 29.08.1996 DE 29615033 U
(43) Veröffentlichungstag der Anmeldung: 11.03.1998
(73) Patentinhaber: Tehalit GmbH & Co. KG, 67716 Heltersberg (DE)
(72) Erfinder: Scherer, Peter, Dipl.-Ing., 67655 Kaiserslautern (DE); Kauf, Peter, Dipl.-Ing., 66482 Zweibrücken (DE); Schneckmann, Horst, 67705 Trippstadt (DE); Tinz, Bernhard H., 72766 Reutlingen (DE); Dumpf, Ulrich, Dipl.-Des., 73249 Wernau (DE)
(74) Vertreter: Patentanwälte Möll und Bitterich

(56) Entgegenhaltungen:
- EP-A- 0 514 862
- FR-A- 2 290 064
- FR-A- 2 727 577
- GB-A- 1 453 952

## Beschreibung

Die Erfindung betrifft Energiesäulen gemäß dem Oberbegriff des Anspruchs 1, die in Räumen aufgestellt werden können, um Elektroinstallationsgeräte an beliebigen Plätzen und in beliebigen Höhen bereitzustellen.

Moderne Arbeitsplätze, insbesondere in Großraumbüros der Verwaltung, der Industrie und des Gewerbes, benötigen Telekommunikations- und Energieanschlüsse in unmittelbarer Nähe jedes Arbeitsplatzes, beispielsweise Steckdosen für 110/230 V-Geräte, für Telefon und für Computer, Lichtschalter, Sicherungsautomaten, Überspannungsschutzgeräte usw. Der Stand der Technik stellt hierfür sogenannte Deckenanschlusssäulen zur Verfügung. Man vergleiche FR-A 2 727 577, FR-A 2 290 064 oder GB-A 1 453 952. Diese bestehen aus etwa raumhohen Aluminiumprofilen mit rechteckigem oder ovalem Querschnitt. Die Vorderseite ist offen, so dass Elektroinstallationsgeräte eingebaut und elektrische Leitungen eingelegt werden können. Trennwände sorgen für eine klare Systemtrennung zwischen Starkstrom und Schwachstrom. Ein ebenfalls aus Aluminium bestehender, ebener Deckel verschließt nach erfolgter Elektromontage das Grundprofil. Ein Fuß, gegebenenfalls kaschiert durch eine Trittschutzhülse, stellt die Verbindung zum Boden her. In die Oberseite des Grundprofils ist ein Teleskoprohr eingesetzt. Dieses besitzt ein spezielles Spannteil mit Feder, so dass die Deckenanschlusssäule zwischen Boden und Betondecke des Großraumbüros eingeklemmt werden kann.

In Büros mit Zwischendecken kommt eine spezielle Klemmbefestigung zur Anwendung, die das obere Ende der Deckenanschlusssäule an der Zwischendecke fixiert. Man vergleiche FR-A 2 290 064 oder GB-A 1 453 952.

Diese Deckenanschlusssäulen nach dem Stand der Technik lassen sich rasterunabhängig an jeder Stelle des Raumes installieren. Die Umgestaltung von Arbeitsplätzen stellt kein Problem dar; die kompletten Säulen werden lediglich an der Stromeinführung der Decke abgeklemmt und am neuen Platz wieder installiert. Eine Rosette kaschiert die Durchführung der Deckenanschlusssäule durch die Zwischendecke bzw. den Anklemmpunkt an der Betondecke.

Eine halbhohe Energiesäule ist bekannt aus der EP-A 0 514 862. Diese besteht aus vier V-förmigen Kabelkanälen, die mit Hilfe eines H-förmigen Verbindungsprofils zu einer Säule mit etwa kreisförmigem Querschnitt verbunden sind. Die offene Vorderseite der Kanäle kann mit einem der Kreisform angepassten Deckel verschlossen werden. Sollen Elektroinstallationsgeräte eingesetzt werden, wird der gewölbte Deckel durch eine flache, glatte ersetzt, die mit vorbereiteten Ausschnitten für die Elektroinstallationsgeräte versehen ist. Auf diese Weise wird das Aussehen der Energiesäule völlig verändert, sobald Elektroinstallationsgeräte montiert werden.

Die bekannten Energiesäulen ermöglichen aufgrund ihrer Konstruktion die Montage der elektrischen Installationsgeräte nur an werkseitig vorbereiteten Positionen, z.B. an der Vorderseite, gegebenenfalls auch an der Rückseite. Dies ist wenig flexibel und führt oftmals zu einer unschönen Anhäufung von Elektroinstallationsgeräten. Auch müssen die Deckel jeweils auf Maß zugeschnitten werden. Das ist unbefriedigend.

Der vorliegenden Erfindung liegt daher die Aufgabe zugrunde, die Energiesäulen derart weiterzuentwickeln, dass sie in jeder beliebigen Länge bzw. Höhe hergestellt und eingesetzt werden können und in gleicher Weise für deckenseitige wie für fußbodenseitige Leitungszuführungen geeignet sind.

Diese Aufgabe wird gelöst durch eine Energiesäule mit den Merkmalen des Anspruchs 1.

Die erfindungsgemäße Energiesäule besteht aus einem im wesentlichen kreisrunden Zylinderrohr, in dessen Inneren wenigstens ein, vorzugsweise drei Kabelkanäle vorgesehen sind. Aufgrund des im wesentlichen kreisförmigen Querschnitts ergibt sich stets eine optisch korrekte Position im Raum. Ebenfalls wegen des im wesentlichen kreisförmigen Querschnitts in Verbindung mit der auf das Zylinderrohr aufgeklemmten Aufnahme für die Elektroinstallationsgeräte lassen sich die Installationsgeräte in jeder beliebigen Höhe und Winkellage positionieren. Da die Deckel aus gummielastischem Material bestehen, lassen sich die elektrischen Leitungen aus dem Kabelkanal herausführen, ohne den Kanaldeckel abnehmen und bearbeiten zu müssen. Schließlich lässt sich das Zylinderrohr in jeder beliebigen Höhe fertigen und aufstellen, beispielsweise nur in Schreibtischhöhe, wobei die Leitungszuführung dann bodenseitig erfolgt. Es besteht sogar die Möglichkeit, die Energiesäule an einer Wand zu fixieren, wenn die Leitungszuführung durch die Wand erfolgt.

Gemäß einer Weiterbildung der Erfindung ist auf das obere Ende des halbhohen Zylinderrohrs eine Endplatte aufgesteckt. Diese Endplatte kann die Form einer Tischplatte haben.

Eine bevorzugte Ausführungsform der erfindungsgemäßen Energiesäule ist die raumhohe Säulenkonstruktion mit deckenseitiger Leitungszuführung. Hierfür sind ein Teleskoprohr und eine Feder-Verspanneinheit vorgesehen. Die damit verbundene Aufgabe wird gelöst durch eine Energiesäule gemäß Anspruch 1 mit den zusätzlichen Merkmalen des Anspruchs 5.

Diese Konstruktion hat den Vorteil, dass das Teleskoprohr um 360° gegenüber dem Zylinderrohr gedreht werden kann, so dass nach dem Abnehmen des Teleskoprohrdeckels jeder Kabelkanal im Zylinderrohr zugänglich wird, beispielsweise für die Nachinstallation. Des weiteren lässt sich auf diese Weise von der deckenseitigen Leitungseinführung aus jeder der vorzugsweise drei Kabelkanäle im Zylinderrohr befüllen. Das Verspannen der Energiesäule zwischen Boden und Decke ist von Hand möglich, da der entsprechende Gewindering aufgrund seiner Position außen auf dem Zylinderrohr leicht zugänglich ist und aufgrund seines Durchmessers eine ausreichende Angriffsfläche für die Hand des Monteurs bietet.

Eine vorzugsweise zweiteilige Kaschierhülse kaschiert die Technik der Verspanneinheit.

Gemäß einer Ausgestaltung der Erfindung ist der Spannring zweiteilig. Zweiteilig bedeutet, daß der Spannring aus zwei Hälften bestehen kann, gemäß einer Weiterbildung bedeutet zweiteilig aber auch, daß ein Klemmring und ein Gewindeteil den Spannring bilden. Er läßt sich dadurch in jeder beliebigen Winkellage und Höhe, vorzugsweise in Kopfhöhe, auf dem Zylinderrohr festklemmen, so daß eine bequeme Anpassung an beliebig hohe Räume möglich ist.

Vorteilhafterweise steht das Zylinderrohr auf einer Bodenplatte. Eine Trittschutzhülse kaschiert das bodenseitige Ende des Zylinderrohrs.

Vorzugsweise sitzt zwischen Teleskoprohr und Kopfplatte ein Teleskopgleitring. Dieser ermöglicht die 360°-Drehung des Teleskoprohrs, ohne daß die Kopfplatte und die durch die Kopfplatte eingeführten elektrischen Leitungen sich mitdrehen.

Vorzugsweise besitzt der Teleskopgleitring ein zu öffnendes Teilstück, welches vorzugsweise mittels Filmscharnier angelenkt ist. Durch das geöffnete Teilstück können elektrische Leitungen von der Decke in das Teleskoprohr ohne Einfädeln eingeführt werden.

Falls die erfindungsgemäße Energiesäule nicht gegen eine Betondecke verspannt werden kann, ist eine Befestigung an einer Zwischendecke erforderlich. Hierzu ist ein zweiteiliges Klemmteil vorgesehen, zu verbinden mit dem Teleskoprohr. Dieses besitzt einen Haltewinkel zur Befestigung des Klemmteils auf der Zwischendecke.

Vorzugsweise besitzt die Kopfplatte nicht nur Aussparungen zum Einführen von elektrischen Leitungen, sondern auch eine Halterung zum Befestigen einer oder mehrere Trennwände, so daß auch im Teleskoprohr die Kabelkanäle des Zylinderrohrs weitergeführt werden und die saubere Trennung zwischen Starkstrom und Schwachstrom aufrechterhalten bleibt.

Vorteilhafterweise besitzen die Aufnahmen für die Elektroinstallationsgeräte wenigstens einen Kanal für die unsichtbare Führung einer elektrischen Leitung aus jedem der Kabelkanäle zum Installationsgerät. Dank dieser Ausgestaltung kann die Aufnahme mit dem Elektroinstallationsgerät auch dann noch gegenüber dem Zylinderrohr verdreht werden, wenn das Elektroinstallationsgerät bereits mit der elektrischen Leitung verbunden ist.

Vorzugsweise ist die Aufnahme für die Elektroinstallationsgeräte zweiteilig. Dies ermöglicht die Klemmontage in jeder beliebigen Höhe und Winkellage und zu jedem Zeitpunkt.

Vorzugsweise sind Trittschutzhülse, Deckenrosette und Kaschierhülse zweiteilig. Dies erleichtert die Befestigung und gegebenenfalls Wiederabnahme dieser Einzelteile.

Gemäß einer besonderen Ausgestaltung der Erfindung bestehen Gleitring, Teleskopgleitring, Gewindeteil, Gewindehülse, Kopfplatte und Trennwand aus Kunststoff.

Zylinderrohr, Teleskoprohr, Teleskoprohrdeckel und Klemmring dagegen bestehen bevorzugt aus Aluminium.

Anhand der Zeichnung soll die Erfindung in Form von Ausführungsbeispielen näher erläutert werden. Es zeigen
- Fig. 1: eine tischhohe Energiesäule in perspektivischer Darstellung,
- Fig. 2: eine wandseitig montierte Energiesäule in perspektivischer Darstellung,
- Fig. 3: eine deckenhohe Energiesäule in perspektivischer Darstellung,
- Fig. 4: eine Ausführungsform einer deckenhohen Energiesäule in schematischer Darstellung,
- Fig. 5: eine Ausführungsform einer zwischendeckenhohen Energiesäule in schematischer Darstellung,
- Fig. 6: eine Aufnahme für Elektroinstallationsgeräte, montiert an der Energiesäule, in perspektivischer Darstellung,
- Fig. 7: den Bodenbereich einer Energiesäule in perspektivischer Darstellung,
- Fig. 8: einen Querschnitt durch ein Teleskoprohr,
- Fig. 9: das untere Ende des Teleskoprohrs in perspektivischer Darstellung,
- Fig. 10: das obere Ende des Teleskoprohrs in perspektivischer Darstellung,
- Fig. 11: eine Kopfplatte mit angeclipster Trennwand in perspektivischer Darstellung,
- Fig. 12: einen Ausschnitt aus einer Energiesäule im Bereich der Verspanneinheit in perspektivischer Darstellung und
- Fig. 13: ein Klemmteil zur deckenseitigen Befestigung der Energiesäule an einer Zwischendecke in perspektivischer Darstellung.

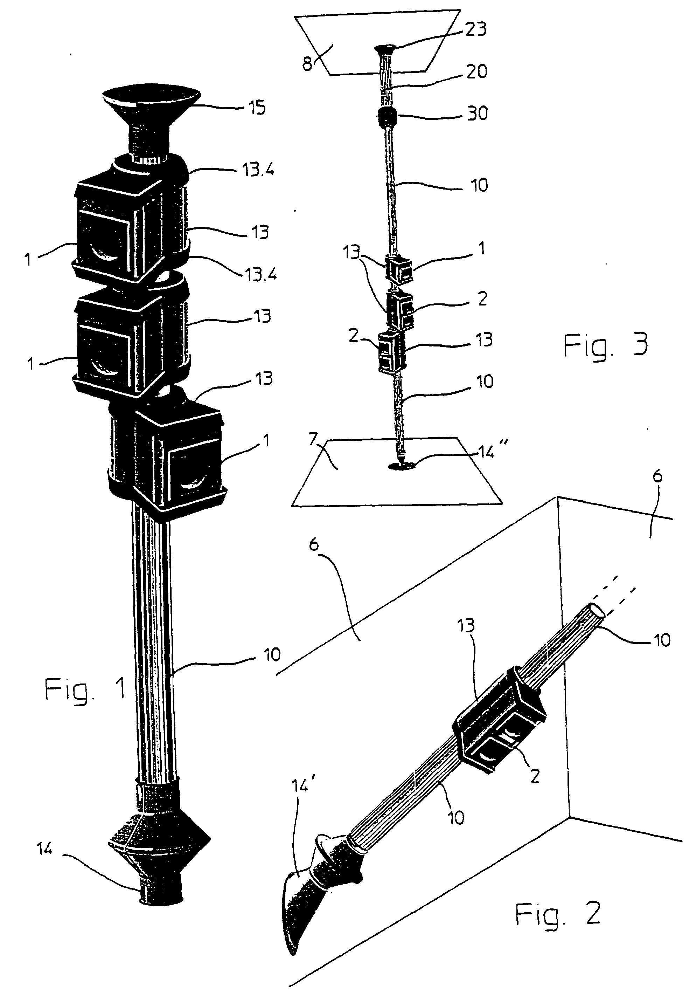

Fig. 1 zeigt in perspektivischer Darstellung eine tischhohe Energiesäule, bestehend aus einem Zylinderrohr 10 mit einem polygonalen, der Kreisform angenäherten Querschnitt. Das Zylinderrohr 10 ist an einem Fuß 14 befestigt, der auf dem Fußboden (nicht dargestellt) zu befestigen ist. Das obere Ende des Zylinderrohrs 10 ist durch eine Endplatte 15, die eine Ablagefläche bietet, abgeschlossen. Am Zylinderrohr 10 sind in unterschiedlichen Positionen drei Aufnahmen 13 für je ein Elektroinstallationsgerät 1, hier Schutzkontaktsteckdosen, angeklemmt. Jede Aufnahme 13 besitzt zwei Kanäle 13.4 für die unsichtbare Führung einer elektrischen Leitung.

Fig. 2 zeigt eine Energiesäule, bestehend aus einem Zylinderrohr 10 mit angeklemmter Aufnahme 13 für ein Elektroinstallationsgerät 2, hier eine Doppelsteckdose, die mit Hilfe eines entsprechenden Fußes 14' schräg an einer Raumwand 6 befestigt ist.

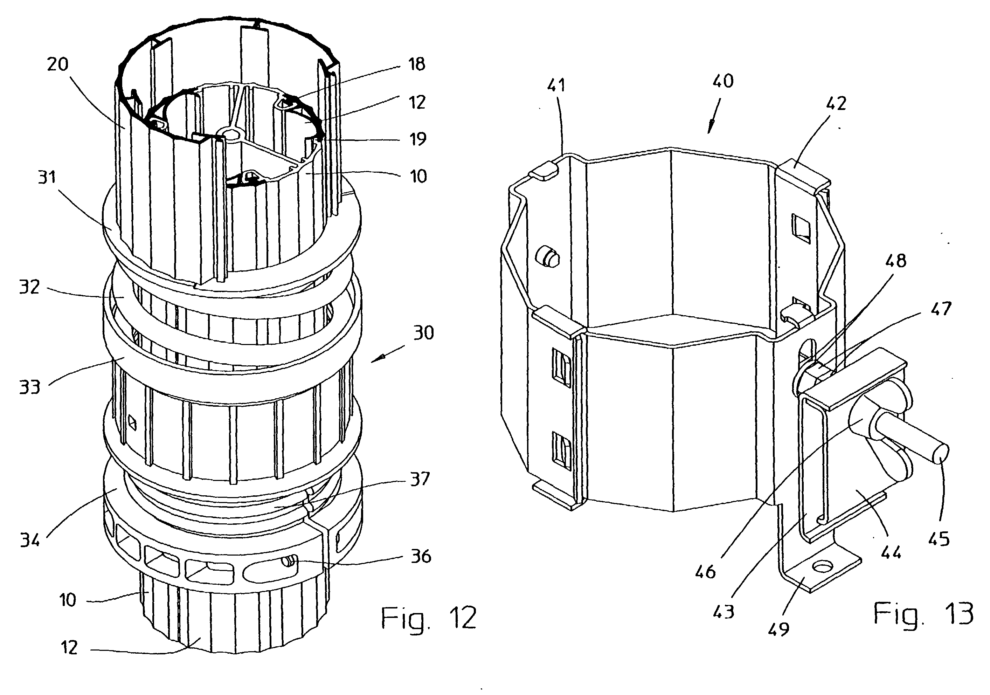

Fig. 3 zeigt als drittes Ausführungsbeispiel eine deckenhohe Energiesäule, eingeklemmt zwischen Fußboden 7 und Betondecke 8. Das Zylinderrohr 10 steht auf einem Fuß 14''. Etwa in Kopfhöhe ist an dem Zylinderrohr 10 eine Verspanneinheit 30 befestigt, die anhand der Fig. 12 noch näher erläutert werden soll. Oberhalb der Verspanneinheit 30 ist ein Teleskoprohr 20 vorgesehen, welches von einer in der Verspanneinheit 30 vorgesehenen Feder 32 gegen die Betondecke 8 gepreßt wird. Eine Deckenrosette 23 kaschiert das deckenseitige Ende des Teleskoprohrs 20.

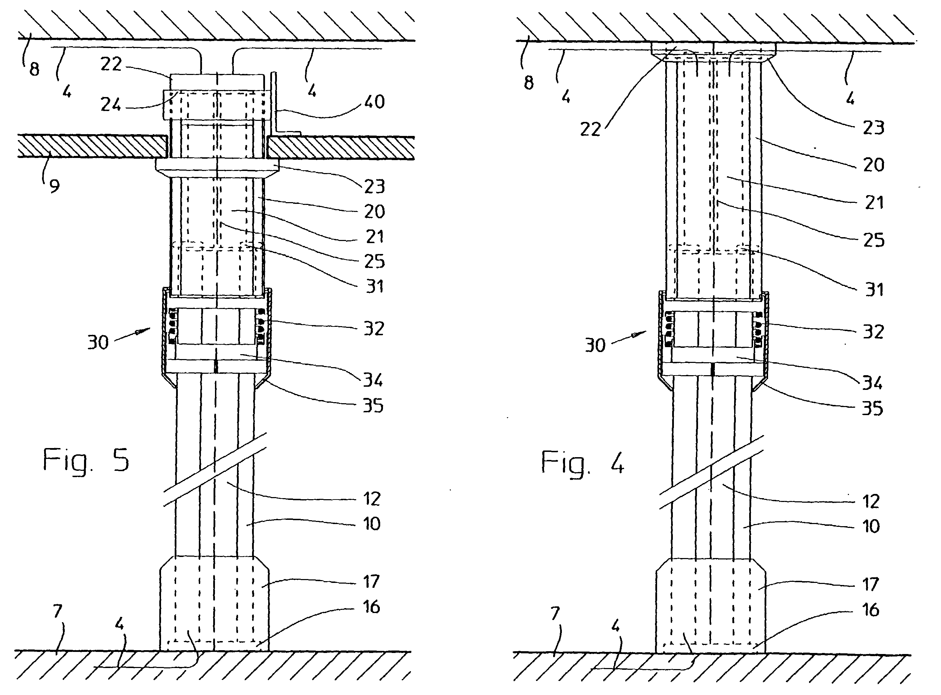

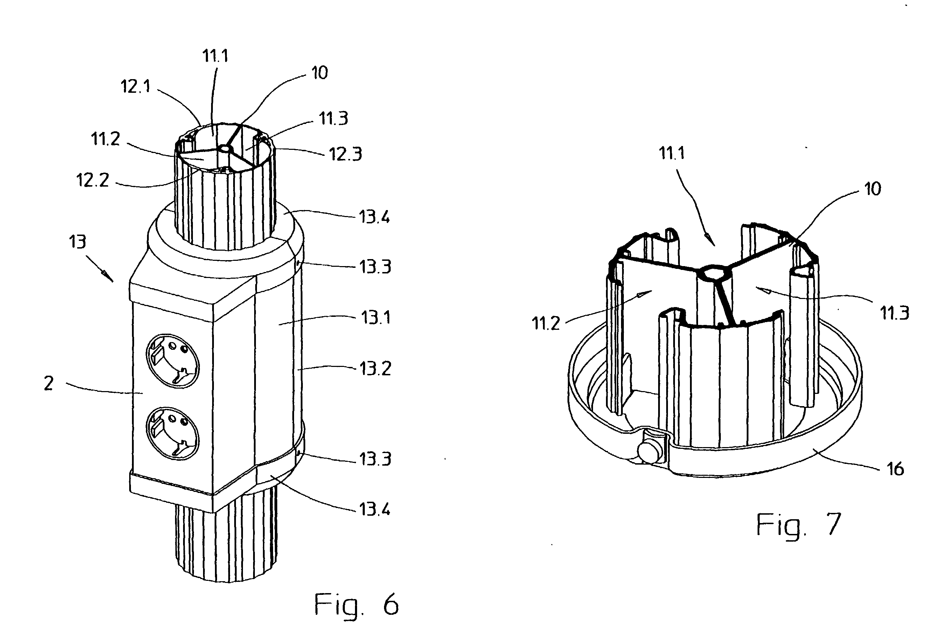

Fig. 4 zeigt in schematischer Darstellung ein erstes Ausführungsbeispiel einer deckenhohen Energiesäule. Das Zylinderrohr 10 steht auf einer Bodenplatte 16 (siehe Fig. 7), die ihrerseits auf dem Fußboden 7 liegt. Eine zweiteilige Trittschutzhülse 17 kaschiert das untere Ende des Zylinderrohrs 10 und die Bodenplatte 16.

Im Inneren des Zylinderrohrs 10 befinden sich vorzugsweise drei Kabelkanäle 11.1, 11.2, 11.3 (siehe Fig. 7), die über je einen abnehmbaren Deckel 12 zugänglich sind.

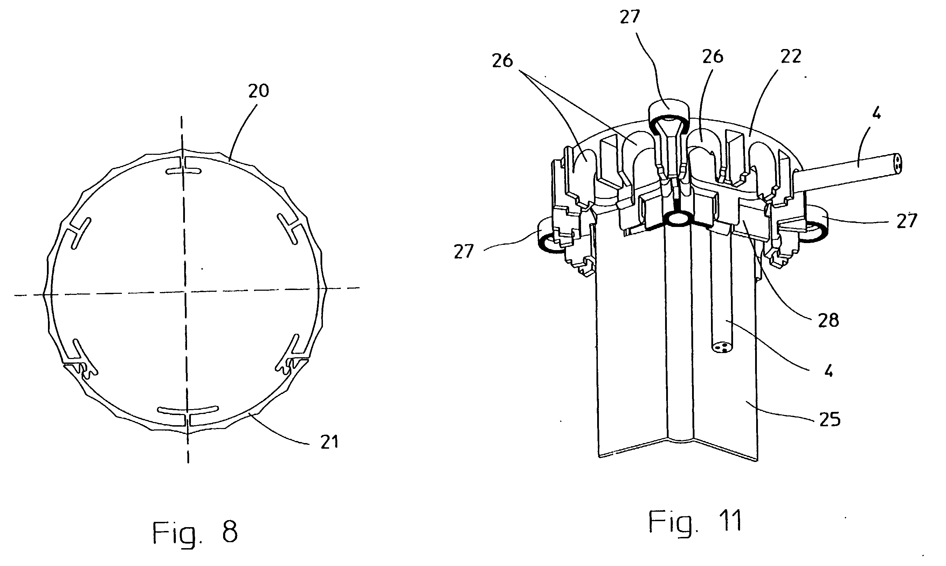

Etwa in Kopfhöhe ist auf das Zylinderrohr 10 die Verspanneinheit 30 aufgeklemmt, die anhand der Fig. 12 noch näher erläutert wird. Die Verspanneinheit 30 drückt ein Teleskoprohr 20 mit abnehmbarem Deckel 21 gegen eine Kopfplatte 22 (siehe Fig. 11), die sich ihrerseits an der Betondecke 8 abstützt.

Fig. 5 zeigt ein zweites Ausführungsbeispiel einer deckenhohen Energiesäule, die an einer Zwischendecke 9 befestigt ist. Zur Halterung des Teleskoprohrs 20 an der Zwischendecke 9 ist ein Klemmteil 40 vorgesehen, welches anhand der Fig. 13 noch näher erläutert werden soll.

Fig. 6 zeigt in perspektivischer Darstellung einen Ausschnitt aus einer Energiesäule im Bereich eines Elektroinstallationsgerätes 2, hier einer Doppelsteckdose. Man erkennt im Zylinderrohr 10 die drei Kabelkanäle 11.1, 11.2, 11.3, die jeweils durch einen Deckel 12.1, 12.2, 12.3 verschlossen sind. Die Deckel 12.1, 12.2, 12.3 bestehen vorzugsweise aus einem gummielastischen Werkstoff, so daß eine elektrische Leitung 4 an jeder beliebigen Stelle aus einem Kabelkanal 11 herausgeführt werden kann, ohne daß die Deckel 12.1, 12.2, 12.3 ausgeschnitten werden müssen.

Die Aufnahme 13 für das Elektroinstallationsgerät 2 besteht aus einem Vorderteil 13.1 und einem Rückteil 13.2, die mit Hilfe von Klemmschrauben 13.3 miteinander verbunden sind, so daß die Aufnahme 13 unter Spannung auf dem Zylinderrohr 10 gehalten wird. Das untere und obere Ende der Aufnahme 13 ist als Kanal 13.4 ausgebildet, so daß elektrische Leitungen aus jedem der drei Kabelkanäle 11.1, 11.2, 11.3 unsichtbar herausgeführt und an das Elektroinstallationsgerät 2 angeschlossen werden können. Dank der Kanalkonstruktion 13.4 besteht die Möglichkeit, die Aufnahme 13 gegenüber dem Zylinderrohr 10 zu verdrehen, auch wenn das Elektroinstallationsgerät 2 bereits angeschlossen ist.

Fig. 7 zeigt in perspektivischer Darstellung ausschnittsweise das bodenseitige Ende einer Energiesäule. Man erkennt das Zylinderrohr 10 mit den drei Kabelkanälen 11.1, 11.2, 11.3. Die die Kabelkanäle verschließenden Deckel 12 sind nicht dargestellt. Das Zylinderrohr 10 sitzt auf der Bodenplatte 16, die ihrerseits auf dem Fußboden (nicht dargestellt) aufliegt.

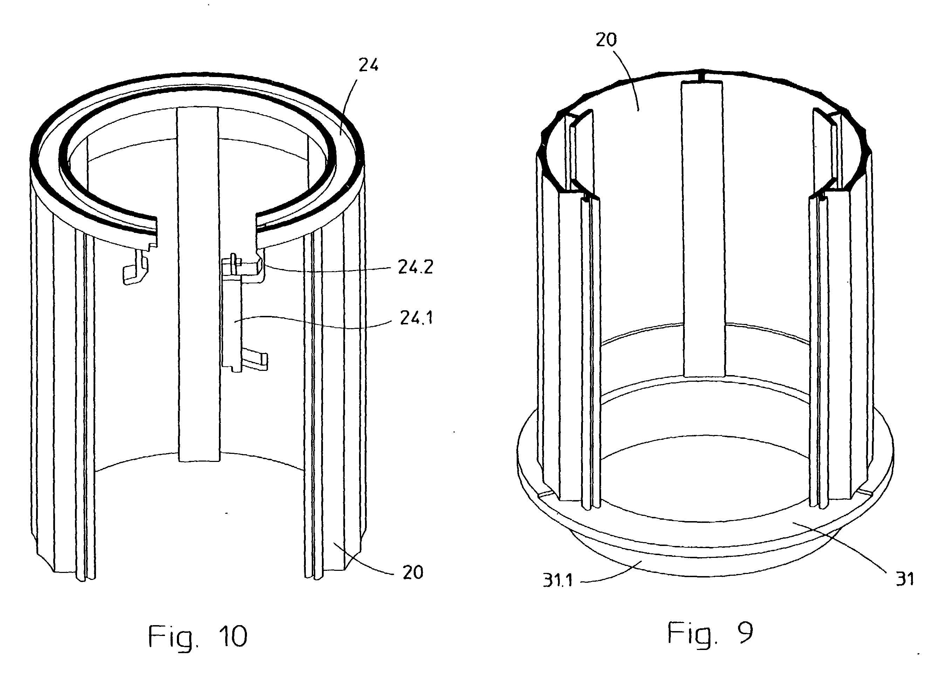

Fig. 8 zeigt einen Querschnitt durch das Teleskoprohr 20 mit aufgesetztem Deckel 21. Beide bestehen aus Aluminium.

Fig. 9 zeigt in perspektivischer Darstellung das untere Ende des Teleskoprohrs 20 bei abgenommenem Teleskoprohrdeckel. Das Teleskoprohr 20 sitzt auf einem Gleitring 31, der Teil der Verspanneinheit 30 ist. Das Teleskoprohr 20 kann auf dem Gleitring 31 um 360° gedreht werden, so daß durch die offene Vorderseite des Teleskoprohrs jeder der drei Kabelkanäle 11.1, 11.2, 11.3 zugänglich wird.

An seiner Unterseite besitzt der Gleitring 31 einen verjüngten Bund 31.1, der eine Gleitverbindung zur Spannfeder 32 der Verspanneinheit 30 herstellt.

Fig. 10 zeigt das obere Ende des Teleskoprohrs 20. Hier ist ein Teleskopgleitring 24 vorgesehen. Dieser besitzt ein mittels Filmscharnier 24.2 angelenktes, zu öffnendes Teilstück 24.1. Dies ermöglicht das Einlegen von elektrischen Leitungen ohne Einfädeln.

Fig. 11 zeigt die Kopfplatte 22, die zwischen Teleskopgleitring 24 und Betondecke 8 positioniert ist. Die Kopfplatte ist mit Befestigungsösen 27 ausgerüstet. Sie besitzt Aussparungen 26 für die elektrischen Leitungen 4. Da der Teleskopgleitring 24 (Fig. 10) mit seinem zu öffnenden Teilstück 24.1 auch gegenüber der Kopfplatte 22 verdreht werden kann, lassen sich die elektrischen Leitungen 4 ohne Fädelvorgang in jede Aussparung 26 einführen.

Die Kopfplatte 22 trägt an ihrer Unterseite zusätzlich eine Halterung 28, an der Trennwände 25 angeclipst werden können. Form und Länge der Trennwand 25 sind an das Zylinderrohr 10 und die darin vorgesehenen Kabelkanäle 11.1, 11.2, 11.3 angepaßt.

Fig. 12 zeigt in perspektivischer Darstellung die Verspanneinheit 30. Auf das Zylinderrohr 10 ist mit Hilfe von Spannschrauben 36 der zweiteilige Spannring 34 aufgeklemmt. Auf dessen Gewindeteil 37 läuft eine Gewindehülse 33. Auf dieser sitzt oben die Spannfeder 32, die ihrerseits von unten gegen den Gleitring 31 drückt. Die Gewindehülse 33 läßt sich von Hand verdrehen. Sitzt die Verspanneinheit 30 etwa in Kopfhöhe, läßt sich die deckenhohe Energiesäule bequem vom Boden aus montieren und verspannen. Nach erfolgter Montage wird die Verspanneinheit 30 von der zweiteiligen Kaschierhülse 35 (Fig. 4 und 5) verdeckt.

Fig. 13 zeigt in perspektivischer Darstellung das Klemmteil 40 zur Befestigung der Energiesäule an der Zwischendecke 9 (Fig. 5). Das Klemmteil 40 ist zweiteilig und besteht aus einem Klemmteil-Vorderteil 41 und einem Klemmteil-Rückteil 42. An diesem befindet sich unten der Haltewinkel 49 der die Verbindung zur Zwischendecke 9 herstellt. Mit Hilfe von Sechskantschraube 45, Zahnscheibe 48, Sechskantmuttern 47 und Flügelmutter 46 in Verbindung mit den beiden Laschen 43, 44 wird das Klemmteil 40 an der Zwischendecke 9 befestigt.

## Patentansprüche

1. Energiesäule zum Aufstellen in Räumen zwecks Bereitstellung von Elektroinstallationsgeräten (1, 2) - Steckdosen, Sicherungsautomaten, Schalter usw. - an beliebigen Plätzen und in beliebigen Höhen, umfassend
- ein Zylinderrohr (10) mit einem kreisförmigen bzw. der Kreisform angenäherten polygonalen Querschnitt,
-- darin wenigstens einen Kabelkanal (11) für elektrische Leitungen (4),
-- daran wenigstens einen Deckel (12) zum lösbaren Verschließen des Kabelkanals (11),
-- und daran wenigstens eine Aufnahme (13) für das Elektroinstallationsgerät (1,2)
- einen Fuß (14, 14', 14") unter dem Zylinderrohr (10)
-- verbunden mit dem Zylinderrohr (10)
-- und gegebenenfalls mit einer Einrichtung zum Einführen der elektrischen Leitungen in den Kabelkanal (11) ausgerüstet,
**gekennzeichnet durch** die Merkmale:
der Deckel (12) zum lösbaren Verschließen des Kabelkanals (11.1, 11.2, 11.3) besteht aus einem gummielastischen Material,
- die Aufnahme (13) für das Installationsgerät (1, 2) ist auf Zylinderrohr (10) und Deckel (12) aufgeklemmt.

2. Energiesäule nach Anspruch 1, **gekennzeichnet durch** das Merkmal:
- im Zylinderrohr (10) sind drei Kabelkanäle (11.1, 11.2, 11.3) vorgesehen.

3. Energiesäule nach Anspruch 1 oder 2, **gekennzeichnet durch** die Merkmale:
- das Zylinderrohr (10) ist halbhoch,
- auf sein oberes Ende ist eine Endplatte (15) aufgesteckt.

4. Energiesäule nach Anspruch 3, **gekennzeichnet durch** das Merkmal:
- die Endplatte (15) hat die Form einer Tischplatte.

5. Energiesäule nach Anspruch 1 oder 2, **gekennzeichnet durch** die Merkmale:
- es ist ein Teleskoprohr (20) vorgesehen,
- auf das Teleskoprohr (20) ist eine Kopfplatte (22) aufgesetzt,
- auf das Zylinderrohr (10) ist eine Verspanneinheit (30) aufgeklemmt, bestehend aus:
- einem Spannring (34) mit Spanngewinde (37),
- einer Gewindehülse (33) auf dem Spanngewinde (37),
- einer Spannfeder (32) auf der Gewindehülse (33)
- und einem Gleitring (31) auf der Spannfeder (32),
- das Teleskoprohr (20) sitzt auf dem Gleitring (31) auf,
- eine Kaschierhülse (35) deckt die Verspanneinheit (30) ab.

6. Energiesäule nach Anspruch 5, **gekennzeichnet durch** die Merkmale:
- das Teleskoprohr (20) ist
-- einseitig offen
-- und um 360° drehbar,
- die Öffnung ist mit einem Teleskoprohrdeckel (21) verschließbar.

7. Energiesäule nach Anspruch 5 oder 6, **gekennzeichnet durch** das Merkmal:
- die Verspanneinheit (30) ist in Kopfhöhe montiert.

8. Energiesäule nach Anspruch 5, **gekennzeichnet durch** das Merkmal:
- der Spannring (34) besteht
-- aus einem Klemmring
-- und einem Gewindeteil.

9. Energiesäule nach einem der Ansprüche 5 bis 8, **gekennzeichnet durch** das Merkmal:
- das Zylinderrohr (10) steht auf einer Bodenplatte (16),
- eine Trittschutzhülse (17) kaschiert das bodenseitige Ende des Zylinderrohrs (10).

10. Energiesäule nach einem der Ansprüche 5 bis 9, **gekennzeichnet durch** das Merkmal:
- zwischen Teleskoprohr (20) und Kopfplatte (22) sitzt ein Teleskopgleitring (24).

11. Energiesäule nach Anspruch 10, **gekennzeichnet durch** das Merkmal:
- der Teleskopgleitring (24) besitzt ein zu öffnendes Teilstück (24.1).

12. Energiesäule nach einem der Ansprüche 5 bis 11, **gekennzeichnet durch** das Merkmal:
- es ist ein Klemmteil (40) vorgesehen,
-- zu verbinden mit dem Teleskoprohr (20, 21),
- das Klemmteil (40)
-- ist zweiteilig
-- und besitzt einen Haltewinkel (49) zur Befestigung des Klemmteils (40) auf einer Zwischendecke (9).

13. Energiesäule nach einem der Ansprüche 5 bis 12, **gekennzeichnet durch** das Merkmal:
- die Kopfplatte (22) besitzt Aussparungen (26) zum Einführen von elektrischen Leitungen.

14. Energiesäule nach einem der Ansprüche 5 bis 13, **gekennzeichnet durch** das Merkmal:
- die Kopfplatte (22) besitzt eine Halterung (28) zum Befestigen von Trennwänden (25).

15. Energiesäule nach einem der Ansprüche 5 bis 14, **gekennzeichnet durch** das Merkmal:
- Spannring (34), Trittschutzhülse (17), Deckenrosette (23) und/oder Kaschierhülse (35) sind zweiteilig.

16. Energiesäule nach einem der Ansprüche 1 bis 15, **gekennzeichnet durch** das Merkmal:
- die Aufnahme (13) für die Elektroinstallationsgeräte (1, 2) besitzt wenigstens einen Kanal (13.4) für die unsichtbare Führung einer elektrischen Leitung aus einem Kabelkanal (11) zum Elektroinstallationsgerät (1, 2, 3).

17. Energiesäule nach einem der Ansprüche 1 bis 16, **gekennzeichnet durch** das Merkmal:
- die Aufnahme (13) für die Elektroinstallationsgeräte (1, 2) ist zweiteilig.

18. Energiesäule nach einem der Ansprüche 1 bis 17, **gekennzeichnet durch** das Merkmal:
- Gleitring (31), Teleskopgleitring (24), Gewindeteil (37), Gewindehülse (33), Kopfplatte (22) und Trennwand (25) bestehen aus Kunststoff,
- Zylinderrohr (10), Teleskoprohr (20), Teleskoprohrdeckel (21) und Klemmring (34) bestehen aus Aluminium.

## Claims

1. Service column for erecting in rooms for the purpose of providing electrical installation appliances (1, 2)-sockets, automatic circuit breakers, switches, etc. - at any desired location and at any desired height, comprising
- a cylindrical tube (10) with a circular cross section or a polygonal cross section approximating a circular form,
- at least one cable duct (11) therein for electric lines (4),
- at least one cover (12) thereon for closing the cable duct (11) such that it can be released,
- and at least one receptacle (13) thereon for the electrical installation appliance (1, 2),
- a base (14, 14', 14") below the cylindrical tube (10)
- connected to the cylindrical tube (10)
- and optionally equipped with a device for introducing the electric lines into the cable duct (11),
**characterised by** the features:
- the cover (12) for the releasable closure of the cable duct (11.1, 11.2, 11.3) consists of an elastomeric material,
- the receptacle (13) for the installation appliance (1, 2) is clamped to the cylindrical tube (10) and the cover (12).

2. Service column according to Claim 1, **characterised by** the feature:
- three cable ducts (11.1, 11.2, 11.3) are provided in the cylindrical tube (10).

3. Service column according to Claim 1 or 2, **characterised by** the features:
- the cylindrical tube (10) is of medium height,
- an end plate (15) is placed on its upper end.

4. Service column according to Claim 3, **characterised by** the feature:
- the end plate (15) is in the form of a table top.

5. Service column according to Claim 1 or 2, **characterised by** the features:
- a telescopic tube (20) is provided,
- a top plate (22) is mounted on the telescopic tube (20),
- a tensioning unit (30) is clamped to the cylindrical tube (10), this unit consisting of:
- a tension ring (34) with a tension thread (37),
- a threaded sleeve (33) on the tension thread (37),
- a tension spring (32) on the threaded sleeve (33)
- and a slip ring (31) on the tension spring (32),
- the telescopic tube (20) is seated on the slip ring (31) ,
- a covering sleeve (35) conceals the tensioning unit (30).

6. Service column according to Claim 5, **characterised by** the features:
- the telescopic tube (20) is
- open on one side
- and can be rotated through 360°,
- the opening can be closed by a telescopic tube cover (21).

7. Service column according to Claim 5 or 6, **characterised by** the feature:
- the tensioning unit (30) is mounted on a level with the head.

8. Service column according to Claim 5, **characterised by** the feature:
- the tension ring (34) consists
- of a clamping ring
- and a threaded part.

9. Service column according to anyone of Claims 5 to 8, **characterised by** the feature:
- the cylindrical tube (10) stands on a bottom plate (16),
- an impact protection sleeve (17) covers the bottom end of the cylindrical tube (10).

10. Service column according to anyone of Claims 5 to 9, **characterised by** the feature:
- a telescopic slip ring (24) is seated between the telescopic tube (20) and the top plate (22).

11. Service column according to Claim 10, **characterised by** the feature:
- the telescopic slip ring (24) has a sub-piece (24.1) which can be opened.

12. Service column according to anyone of Claims 5 to 11, **characterised by** the feature:
- a clamping part (40) is provided
- for connection to the telescopic tube (20, 21),
- the clamping part (40)
- is in two parts
- and has a holding angle (49) for fastening the clamping part (40) to an intermediate ceiling (9).

13. Service column according to anyone of Claims 5 to 12, **characterised by** the feature:
- the top plate (22) has recesses (26) for introducing electric lines.

14. Service column according to anyone of Claims 5 to 13, **characterised by** the feature:
- the top plate (22) has a holder (28) for fastening partitions (25).

15. Service column according to anyone of Claims 5 to 14, **characterised by** the feature:
- tension ring (34), impact protection sleeve (17), ceiling rose (23) and/or covering sleeve (35) are in two parts.

16. Service column according to anyone of Claims 1 to 15, **characterised by** the feature:
- the receptacle (13) for the electrical installation appliances (1, 2) has at least one duct (13.4) for the invisible guidance of an electric line from a cable duct (11) to the electrical installation appliance (1, 2, 3).

17. Service column according to anyone of Claims 1 to 16, **characterised by** the feature:
- the receptacle (13) for the electrical installation appliances (1, 2) is in two parts.

18. Service column according to anyone of Claims 1 to 17, **characterised by** the feature:
- slip ring (31 ), telescopic slip ring (24), threaded part (37), threaded sleeve (33), top plate (22) and partition (25) consist of a plastics material,
- the cylindrical tube (10), telescopic tube (20), telescopic tube cover (21) and clamping ring (34) consist of aluminium.

## Revendications

1. Colonne d'installation d'énergie destinée à être mise en place dans des pièces en vue de la mise à disposition d'appareils d'installations électriques (1, 2) - prises de courant, coupe-circuit automatiques, interrupteurs etc. - à des emplacements quelconques et à des hauteurs quelconques, comprenant
- un tube cylindrique (10) avec une section transversale de forme circulaire ou polygonale se rapprochant de la forme circulaire,
-- à l'intérieur, au moins une gaine de câbles (11) pour les lignes électriques (4),
-- dessus, au moins un couvercle (12) pour le verrouillage amovible de la gaine de câbles (11)
-- et dessus au moins un logement (13) pour l'appareil d'installation électrique (1, 2),
- un pied (14, 14', 14") sous le tube cylindrique (10),
-- relié au tube cylindrique (10)
-- et le cas échéant équipé d'un dispositif destiné à insérer les lignes électriques dans la gaine de câbles (11),
**caractérisée par** les caractéristiques suivantes :
- le couvercle (12) pour le verrouillage amovible de la gaine de câbles (11.1, 11.2, 11.3) se compose d'un matériau ayant l'élasticité du caoutchouc,
- le logement (13) de l'appareil d'installation (1, 2) est calé sur le tube cylindrique (10) et le couvercle (12).

2. Colonne d'installation d'énergie selon la revendication 1, **caractérisée par** la caractéristique suivante :
- dans le tube cylindrique (10) sont prévues trois gaines de câbles (11.1, 11.2, 11.3).

3. Colonne d'installation d'énergie selon la revendication 1 ou 2, **caractérisée par** les caractéristiques suivantes :
- le tube cylindrique (10) est à mi-hauteur,
- à son extrémité supérieure est rapportée une plaque d'extrémité (15).

4. Colonne d'installation d'énergie selon la revendication 3, **caractérisée par** la caractéristique suivante :
- la plaque d'extrémité (15) a la forme d'un dessus de table.

5. Colonne d'installation d'énergie selon la revendication 1 ou 2, **caractérisée par** les caractéristiques suivantes :
- il est prévu un tube télescopique (20),
- sur le tube télescopique (20) est posée une plaque de recouvrement (22),
- sur le tube cylindrique (10) est calée une unité de déformation (30) qui se compose :
-- d'une bague de tension (34) avec filetage de serrage (37),
-- d'une douille filetée (33) montée sur le filetage de serrage (37),
-- d'un ressort de rappel (32) placé sur la douille filetée (33)
-- et d'une bague de glissement (31) sur le ressort de rappel (32),
- le tube télescopique (20) repose sur la bague de glissement (31),
- une douille formant cache (35) couvre l'unité de déformation (30).

6. Colonne d'installation d'énergie selon la revendication 5, **caractérisée par** les caractéristiques suivantes :
- le tube télescopique (20) est
-- ouvert d'un côté
-- et tournant sur 360°,
- l'ouverture est verrouillable par un couvercle du tube télescopique (21).

7. Colonne d'installation d'énergie selon la revendication 5 ou 6, **caractérisée par** la caractéristique suivante :
- l'unité de déformation (30) est montée à hauteur de tête.

8. Colonne d'installation d'énergie selon la revendication 5, **caractérisée par** la caractéristique suivante :
- la bague de tension (34) se compose
-- d'une bague de serrage
-- et d'une pièce filetée.

9. Colonne d'installation d'énergie selon l'une quelconque des revendications 5 à 8, **caractérisée par** la caractéristique suivante :
- le tube cylindrique (10) est situé sur une plaque de base (16),
- une douille de protection (17) dissimule l'extrémité côté base du tube cylindrique (10).

10. Colonne d'installation d'énergie selon l'une quelconque des revendications 5 à 9, **caractérisée par** la caractéristique suivante :
- entre le tube télescopique (20) et la plaque de recouvrement (22) est située une bague de glissement télescopique (24).

11. Colonne d'installation d'énergie selon la revendication 10, **caractérisée par** la caractéristique suivante :
- la bague de glissement télescopique (24) possède un élément (24.1) à ouvrir.

12. Colonne d'installation d'énergie selon l'une quelconque des revendications 5 à 11, **caractérisée** la caractéristique suivante :
- il est prévu une pièce de serrage (40),
-- à relier avec le tube télescopique (20, 21),
- la pièce de serrage (40)
-- est composée de deux pièces
-- et possède un coude de retenue (49) destiné à fixer la pièce de serrage (40) sur un plafond intermédiaire (9).

13. Colonne d'installation d'énergie selon l'une quelconque des revendications 5 à 12, **caractérisée par** la caractéristique suivante :
- la plaque de revêtement (22) possède des évidements (26) destinés à insérer des lignes électriques.

14. Colonne d'installation d'énergie selon l'une quelconque des revendications 5 à 13, **caractérisée par** la caractéristique suivante :
- la plaque de revêtement (22) possède une fixation (28) destinée à fixer des parois de séparation (25).

15. Colonne d'installation d'énergie selon l'une quelconque des revendications 5 à 14, **caractérisée par** la caractéristique suivante :
- la bague de tension (34), la douille de protection (17), la rosace de plafond (23) et/ou la douille de revêtement (35) se composent de deux pièces.

16. Colonne d'installation d'énergie selon l'une quelconque des revendications 1 à 15, **caractérisée par** la caractéristique suivante :
- le logement (13) des appareils d'installations électriques (1, 2) possède au moins une gaine (13.4) pour le guidage invisible d'une ligne électrique d'une gaine de câbles (11) jusqu'à l'appareil d'installation électrique (1, 2, 3).

17. Colonne d'installation d'énergie selon l'une quelconque des revendications 1 à 16, **caractérisée par** la caractéristique suivante :
- le logement (13) des appareils d'installations électriques (1, 2) se compose de deux pièces.

18. Colonne d'installation d'énergie selon l'une quelconque des revendications 1 à 17, **caractérisée par** la caractéristique suivante :
- bague de glissement (31), bague de glissement télescopique (24), pièce filetée (37), douille filetée (33), plaque de revêtement (22) et paroi de séparation (25) se composent de matière synthétique,
tube cylindrique (10), tube télescopique (20), couvercle de tube télescopique (21) et bague de serrage (34) se composent d'aluminium.
